**Europäisches Patentamt**

**European Patent Office**

**Office européen des brevets**

(19)

(11) Veröffentlichungsnummer: **0 197 364**
**B1**

(12) # EUROPÄISCHE PATENTSCHRIFT

(45) Veröffentlichungstag der Patentschrift:
27.09.89

(21) Anmeldenummer: 86103575.6

(22) Anmeldetag: 18.03.86

(51) Int. Cl.⁴: **B23Q 7/14**, B23Q 7/10,
B23P 23/00

(54) Vorrichtung und Verfahren zum Handhaben von Werkstücken.

(30) Priorität: 19.03.85 DE 3509802

(43) Veröffentlichungstag der Anmeldung:
15.10.86 Patentblatt 86/42

(45) Bekanntmachung des Hinweises auf die Patenterteilung:
27.09.89 Patentblatt 89/39

(84) Benannte Vertragsstaaten:
AT BE CH DE FR GB IT LI NL SE

(56) Entgegenhaltungen:
EP-A- 0 062 267
EP-A- 0 076 231
EP-A- 0 154 571
CH-A- 148 313
CH-B- 11 426
DE-A- 1 506 893
DE-A- 1 552 770
FR-A- 2 216 197
GB-A- 2 094 254
GB-A- 2 127 765
US-A- 3 473 645
US-A- 3 807 314
US-A- 3 944 049
US-A- 3 998 316
US-A- 4 397 384

(73) Patentinhaber: Heckler & Koch GmbH, Pfäfflinstrasse
Postfach 1329, D-7238 Oberndorf(DE)

(72) Erfinder: Bilger, Bernhard, Herbergstrasse 13,
D-7215 Bösingen(DE)
Erfinder: Schefold, Elmar, Teckstrasse 19,
D-7238 Oberndorf(DE)

(74) Vertreter: Patentanwälte Kohler - Schwindling - Späth,
Hohentwielstrasse 41, D-7000 Stuttgart 1(DE)

(56) Entgegenhaltungen: (Fortsetzung)
FLEXIBLE AUTOMATION, Nr. 1, März 1985, Seite 86,
Gräfelfing, DE; "Weltneuheit"
DIE UHR, Band 28, Nr. 20, 25. Oktober 1973,
Seiten 90-93, Bielefelder Verlagsanstalt K.G., Bielefeld,
DE; "SAMA-International in Bern"

## Beschreibung

Die Erfindung betrifft eine Vorrichtung zum Handhaben von Werkstücken mit einer ortsfesten, mindestens ein Werkzeug aufweisenden Bearbeitungs/Montagestation, mit Magazinen und einer mit Antriebsmitteln versehenen Zubringereinrichtung, die zwischen der Station und Magazinen in Gestalt einer Fördereinrichtung, die ein auf einem Tisch angeordnetes Förderband aufweist, zum Transport einer vorbestimmten Anzahl von Werkstückträgern angeordnet ist.

Die Erfindung betrifft ferner ein Verfahren zum Handhaben von Werkstücken, bei dem ein Werkzeug einer Bearbeitungs/Montagestation auf das Werkstück einwirkt, bei dem ferner eine vorbestimmte Anzahl Werkstückträger mittels einer Zubringereinrichtung der Station aus Magazinen zugeführt werden.

Eine derartige Vorrichtung und ein derartiges Verfahren sind aus der Zeitschrift "Die Uhr", Bd. 28, Nr. 20, 25.10.1973, Seiten 90 bis 93, Bielefelder Verlagsanstalt K.G. Bielefeld, DE bekannt. Auch das Umschalten der Förderrichtung ist dort beschrieben.

Bei der bekannten Handhabungs- und Bearbeitungsvorrichtung werden die Werkstückträger aus einem zylindrischen, drehbaren Magazin auf ein Förderband gesetzt. Das Förderband führt die Werkstückträger in eine Bearbeitungszone. Nach erfolgter Bearbeitung eines Werkstücks transportiert das Förderband das Werkstück in ein zweites, ebenfalls zylindrisch, drehbar ausgebildetes Magazin. Die Förderrichtung des Förderbandes ist umschaltbar, so daß nach einem Bearbeitungsvorgang die in dem zweiten Magazin gespeicherten Werkstücke und Werkstückträger auf ihrem Transportweg zurück zu dem ersten Magazin erneut bearbeitet werden können. Das Förderband und die Magazine bilden eine geschlossene Einheit.

Eine weitere Vorrichtung und ein weiteres Verfahren sind aus der EP-A-0076231 bekannt.

In dieser Druckschrift ist ein Montage- und Bearbeitungsautomat beschrieben, der eine in mehreren räumlichen Achsen verfahrbare Bearbeitungs/Montagestation aufweist. Auf der einen Seite der Station befindet sich ein kreisscheibenförmiger, um seinen Mittelpunkt drehbarer Werkstückträger, über dessen Umfang verteilt Werkstücke angeordnet sind. Durch Drehen des Werkstückträgers kann jeweils eines der Werkstükke in den Arbeitsbereich der Station gebracht werden. Auf der am Werkstückträger abgewandten Seite der Station befindet sich ein Fließband, das der Station schrittweise Paletten zuführt, wobei auf den Paletten eine bestimmte Anzahl von Teilen angeordnet ist, die der Anzahl der Werkstücke auf dem Werkstückträger entspricht. Außerdem sind die Teile auf den Paletten räumlich so ausgerichtet, daß sie von der Station mittels eines geeigneten Werkzeuges ohne weiteres zu den jeweils in Handhabungsposition befindlichen Werkstücken gebracht und dort montiert werden können.

Durch die Verwendung eines kreisscheibenförmigen Werkstückträgers ist auf dem bekannten Automaten jedoch nur eine Bearbeitung einer relativ geringen Anzahl von Werkstücken möglich, typischerweise in der Größenordnung von 8 bis 10 Werkstücken. Der Grund hierfür liegt einmal darin, daß bei vernünftigen Abmessungen auf dem Umfang eines kreisscheibenförmigen Werkstückträgers eben nur eine begrenzte Anzahl von Werkstücken angeordnet werden kann. Außerdem sind den Abmessungen des Werkstückträgers aus Transportgründen Grenzen gesetzt, weil Werkstückträger in aller Regel nicht am Automaten, sondern räumlich entfernt davon bestückt werden, um den Automaten während der Bestückungszeit nicht zu blockieren.

Weitere Bearbeitungs/Montagestationen sind aus CH-A 148 313, DS-A 1 506 893, DE-A 1 552 770, GB-A 2 127 765, US-A 3 473 645 und CH-A 11 426 bekannt geworden.

Der Erfindung liegt daher die Aufgabe zugrunde, die eingangs genannte Vorrichtung bzw. das eingangs genannte Verfahren dahingehend weiterzubilden, daß Werkstücke in großer Anzahl, ohne Unterbrechung eines Arbeitsvorganges, an die Handhabungs- Bearbeitungsvorrichtung kontrolliert herangeführt werden können.

Diese Aufgabe wird erfindungsgemäß dadurch gelöst, daß die vorzugsweise fahrbaren Magazine getrennt von der Fördereinrichtung angeordnet sind, daß die Zubringereinrichtung zwischen den Magazinen und der Fördereinrichtung Umsetzeinrichtungen aufweist, daß die Magazine, die Umsetzeinrichtungen, die Fördereinrichtung und die Station einzeln antreibbar sind und daß das Förderband so ausgebildet ist, daß es seitlich an den Werkstückträger angreift und diese kraftschlüssig mitführt.

Die genannte Aufgabe wird erfindungsgemäß ferner, ausgehend von einem Verfahren zum Handhaben von Werkstücken gelöst, bei dem ein Werkzeug einer Bearbeitungs/Montagestation auf das Werkstück einwirkt, bei dem ferner eine vorbestimmte Anzahl Werkstückträger mittels einer Zubringereinrichtung der Station aus Magazinen zugeführt werden, in einer vorbestimmten Nähe der Station die Anzahl der dort befindlichen Werkstückträger erfaßt wird, bei Überschreiten einer vorgegebenen Anzahl die Förderleistung der Magazine, Umsetzeinrichtungen und der eine Fördereinrichtung aufweisenden Zubringereinrichtung vermindert wird, nach erfolgter Handhabung aller Werkstücke gleicher Art die Förderrichtungen der Magazine, der Umsetzeinrichtungen und der Fördereinrichtung umgeschaltet werden und nach erfolgter Handhabung aller Werkstücke gleicher Art das Werkzeug gewechselt wird.

Die Erfindung löst damit die zugrundeliegende Aufgabe vollkommen und vermeidet die aus dem Stand der Technik bekannten Nachteile.

Verglichen mit der eingangs genannten Vorrichtung bzw. dem Verfahren hat die erfindungsgemäße nämlich den Vorteil, daß eine praktisch beliebig große Anzahl von Werkstücken nacheinander mit einem bestimmten Vorgang gehandhabt werden kann, wobei die Werkstückträger in den Magazinen ohne weiteres wo anders bestückt werden können, ohne die eigentliche Bearbeitungs-/Montagestation zu blockieren.

Weiter ist von Vorteil, daß aufgrund des seitlichen Angriffs des Förderbandes am Werkstückträger das Werkstück zu allen anderen Seiten und nach oben optimal freiliegt, so daß die Handhabungsvorgänge nahezu aus allen Richtungen am Werkstück ablaufen können. Auch haben die Maßnahmen den Vorteil, daß die eigentliche Fördereinrichtung sich im Zentrum des Tisches befindet, während die Werkstückträger an der Peripherie des Tisches entlang gefördert werden und damit nicht nur für das Umsetzen und die Handhabung optimal zugänglich sind, sondern darüber hinaus auch bestens beobachtet und gegebenenfalls von Hand bearbeitet, gekennzeichnet oder dergleichen werden können. Außerdem kann weitgehend auf bekannte und bewährte Komponenten zurückgegriffen werden.

Im Rahmen der vorliegenden Erfindung soll unter "Handhabung" jedwede Art von Einwirkung auf ein Werkstück, sei es mit oder ohne Veränderung des Werkstücks, verstanden werden. Insbesondere kommen in Betracht eine spanlose oder spanabhebende Bearbeitung des Werkstückes, eine Montage am Werkstück unter Zuführung von am Werkstück zu montierenden Teilen oder aber ein Transport eines Werkstücks zu und von einer weiteren Bearbeitungsstation, beispielsweise einer Nietpresse oder dergleichen.

In Ausgestaltung der Erfindung ist der Tisch in mehrere Segmente unterteilbar. Dies hat den Vorteil, daß für die jeweilige Handhabungsaufgabe aus einem Baukasten diejenigen Elemente entnommen und zusammengefügt werden können, die jeweils erforderlich sind, um die gewünschte Einrichtung zu schaffen. So wird es insbesondere bei Verwendung mehrerer Stationen oder bei Einrichtungen, die eine getrennte Bearbeitungsstation neben der eigentlichen erfindungsgemäßen Einrichtung umfassen, erforderlich sein, einen größeren Tisch aus den mehreren Segmenten zusammenzusetzen, während bei einfacheren Handhabungsaufgaben und bei kleinerem erforderlichem Pufferraum vor der Station ausreichend sein wird, einen Tisch nur aus der Mindestanzahl erforderlicher Segmente zusammenzusetzen.

Bei einer erfindungsgemäßen Weiterbildung läuft das Förderband formschlüssig über mindestens ein Treibrad und mindestens ein Führungsrad. Diese Maßnahmen haben den Vorteil, daß das Förderband besonders einfach aufgebaut werden kann und daß der gewünschte Kraftschluß zwischen dem Band einerseits und dem Treib- und Führungsrad andererseits mittels einer einfachen Spanneinrichtung gewährleistet werden kann.

In weiterer Ausgestaltung der Erfindung verläuft das Förderband wenigstens abschnittsweise in einem Abstand (d) vom Rand der Oberfläche des Tisches. Der Abstand (d) entspricht zweckmäßigerweise mindestens der Breite der Werkstückträger quer zur Förderrichtung.

In weiterer Ausgestaltung der Erfindung sind die Fördereinrichtung und/oder die Werkstückträger mit Haftmitteln, vorzugsweise Magnete, versehen.

Dies hat den Vorteil, daß Störungen vermieden und Förderaufgaben gegenüber solchen Einrichtungen vereinfacht werden können, bei denen die Fördereinrichtung mit Greifmitteln, Haken oder dergleichen, versehen sind. Haftet nämlich das Förderband lediglich an den Werkstückträgern, kann es bei einer Überlastung infolge einer Störung der Förderung vom Werkstückträger abgleiten, ohne daß dies zu Beschädigungen irgendeiner Art führt. Man kann sich auch, wie weiter unten noch geschildert wird, diese spezielle Eigenschaft zunutze machen, um Förderaufgaben in Stauräumen zu lösen. Magnetische Kräfte lassen sich leicht entweder durch Einstellen des Stromes bei Elektromagneten oder aber durch Materialauswahl bei Dauermagneten dosieren. Dauermagnete haben darüberhinaus auch den Vorteil, keiner weiteren Zuleitungen oder dergleichen zu bedürfen. Bringt man, wie vorstehend geschildert, die Dauermagnete ferner an den Werkstückträgern an und bildet man das Förderband metallisch aus, ergibt sich darüberhinaus von selbst die Zentrierung der Werkstückträger am Förderband, weil – beispielsweise bei einem kreisscheibenförmigen Werkstückträger – der Werkstückträger mit einem flächigen Dauermagneten in einer bestimmten radialen Stellung am Förderband haftet und damit das Werkstück auch relativ zum Förderband und damit relativ zur Station exakt ausrichtet.

Bei einer weiteren Ausgestaltung der Erfindung ist im Arbeitsraum der Station ein Festhalter vorgesehen, der den Werkstückträger in einer Positionierstation fixiert.

Dies hat den Vorteil, daß die zum Fixieren des Werkstückträgers erforderliche Kraft, die von der Art des jeweiligen Handhabungsvorganges abhängt, nicht von der Fördereinrichtung, sondern von einem separaten Festhalter aufgebracht wird, so daß die Fördereinrichtung für derartige Kräfte nicht dimensioniert zu werden braucht. Außerdem kann die Fördereinrichtung demzufolge durchlaufen und es entfällt ein erheblicher Steueraufwand, der bei intermittierender Arbeitsweise der Fördereinrichtung erforderlich wäre, wenn die Fördereinrichtung selbst den Werkzeugträger zum Handhaben fixieren müßte. Es müßten dann auch die Umsetzeinrichtungen mit dieser intermittierenden Arbeitsweise synchronisiert werden und durch diese vielfältigen Verflechtungen wäre das Risiko von Störungen groß. Demgegenüber können bei Verwendung der genannten Merkmale die Umsetzeinrichtungen unsynchronisiert arbeiten, weil selbst bei Ausbildung eines Staus vor der Station sich die Fördereinrichtung (vorübergehend) von den Werkstückträgern in Parkposition löst, bis nach Beendigung eines Handhabungsvorganges der jeweils nächste Werkstückträger nachrückt.

Führungsschienen vor der Positionierstation haben den Vorteil, daß Störungen im Bereich des Stauraumes vor der Station vermieden werden, weil die Werkstückträger beim Lösen von der Fördereinrichtung und beim Wieder-Fördern nicht seitlich ausweichen können und damit weiterhin in ihrer Lage fixiert sind.

Eine weitere Ausführungsform der Erfindung besteht darin, daß in vorgegebenem Abstand von der Positionierstation Sensoren angeordnet sind, die die Anzahl der auf einer vorbestimmten Länge der Fördereinrichtung befindlichen Werkstückträger erfassen und Antriebsmittel steuern.

Diese Maßnahme hat den Vorteil, daß bei Auftreten eines zu langen Staus von Werkstückträgern die Anzahl der auf die Fördereinrichtung umgesetzten Werkstückträger vermindert wird, beispielsweise dadurch, daß durch eine Intervallschaltung der Arbeitstakt derjenigen Umsetzeinrichtung heruntergeteilt wird, welche die Werkstückträger aus dem Magazin der Fördereinrichtung zuführt. Diese Herabsetzung des Arbeitstaktes kann so lange andauern, bis durch die Sensoren erkannt wird, daß sich der Stau aufgelöst hat.

In weiterer Ausgestaltung der Erfindung sind die Magazine als Raumbereiche desselben Speichers ausgebildet.

Diese Maßnahme hat den Vorteil, daß lediglich ein Magazin erforderlich ist, und daß in dem Maße, wie Werkstückträger aus dem Magazin für einen bestimmten Handhabungsvorgang von der einen Umsetzeinrichtung entnommen werden, die andere Umsetzeinrichtung Werkstückträger nach erfolgter Handhabung in die frei gewordenen Speicherplätze bringt. Es ist daher im Rahmen der vorliegenden Erfindung durchaus nicht erforderlich, die beiden Magazine als separate bauliche Einheiten auszubilden.

Bei einer weiteren Ausgestaltung der Erfindung sind die Magazine als Drehkörper ausgebildet, die über ihren Umfang verteilt in mehreren Ebenen übereinander die Werkstückträger speichern. Insbesondere können die Drehkörper an ihrem Umfang mit senkrecht angeordneten Zylinderrohren versehen sein, die jeweils eine vorbestimmte Anzahl von Werkstückträgern übereinander gestapelt enthalten und die Zylinderrohre sind in Aussparungen des Tisches einfahrbar.

Diese Maßnahmen haben den Vorteil, daß zum einen eine besonders große Anzahl von Werkstückträgern in einem Magazin gespeichert werden kann, beispielsweise können bei 16 Zylinderrohren über den Umfang verteilt mit 20 Ebenen von Werkstückträgern übereinander insgesamt 320 Werkstückträger in diesem Magazin gespeichert werden. Die Verwendung von Zylinderrohren hat darüberhinaus den Vorteil, daß diese Zylinderrohre einzeln an den Drehkörpern angesetzt werden können, nachdem sie zunächst in einem Bestückungsvorgang einzeln befüllt wurden. Es können die Werkstückträger in den Zylinderrohren auch durch geeignete Mittel, beispielsweise durch eine Nut/Federführung in Drehrichtung fixiert werden, so daß alle Werkstückträger in den Zylinderrohren eine bestimmte Ausrichtung haben und in dieser vorgegebenen Ausrichtung der Umsetzeinrichtung zugeführt werden. Die Aussparungen des Tisches zum Bestücken bzw. Entleeren der Zubringereinrichtung aus bzw. in die Magazine können beispielsweise an einer Längsseite des Rechtecks und die eine oder mehrere Stationen können an der anderen Längsseite des Rechtecks angeordnet sein. Es verbleiben dann immer noch genügend Wege des Förderbandes beispielsweise an den Schmalseiten des Rechtecks, um Kontrollarbeiten, Kennzeichnungsarbeiten oder dergleichen von Hand oder mittels weiterer Stationen durchzuführen.

In weiterer Ausgestaltung der Erfindung weist die Umsetzeinrichtung Mittel zum Verschieben des Stapels von Werkzeugträgern, vorzugsweise Kolben, auf.

Das Verschieben des Stapels von Werkstückträgern kann von einem Spindel-Kolbensystem bzw. einer Kolben- Zylindereinheit übernommen werden. Die Variante mit der Spindel eignet sich besonders zum Hochschieben eines ganzen Stapels von Werkstückträgern, weil mit der Spindel erheblich Gewichte gehalten und nach oben verfahren werden können, anderseits aber durch eine Selbsthemmung der Spindel erreicht werden kann, daß auch bei Vibrationen der Stapel von Werkstückträgern sich nicht in unerwünschter Weise wieder nach unten bewegen kann und so der jeweils oberste Werkstückträger aus einer Referenzposition für das Umsetzen gerät. Anderseits eignet sich die Kolben-Zylindereinheit, beispielsweise mit pneumatischer Betätigung, insbesondere dazu, um bei der Abnahme von Werkstückträgern von der Fördereinrichtung den Werkstückträger außer Eingriff mit dem Band zu bringen, weil bei diesem Arbeitsspiel nur kurze Verfahrwege und kurze Einsatzzeiten erforderlich sind.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1 eine schematische Darstellung eines Ausführungsbeispiels einer erfindungsgemäßen Vorrichtung zum Handhaben von Werkstücken;

Fig. 2 eine praktische Ausführungsform der mechanischen Komponenten einer Vorrichtung gemäß Fig. 1;

Fig. 3 eine Darstellung im Schnitt und in größerem Maßstabe der zum Umsetzen von einem Magazin zu einer Fördereinrichtung gemäß Fig. 2 erforderlichen Komponenten;

Fig. 4 eine perspektivische Darstellung einiger der Elemente gemäß Fig. 3 zu deren weiterer Veranschaulichung.

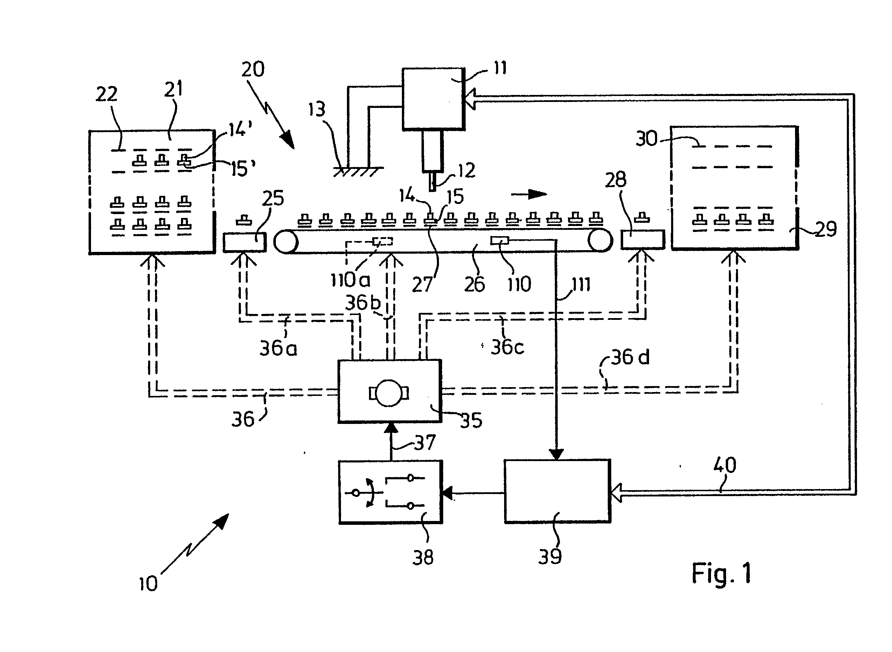

In Fig. 1 ist mit 10 insgesamt eine Handhabungseinrichtung bezeichnet. Die Handhabungseinrichtung 10 dient zum Montieren, Transportieren und Bearbeiten oder sonstigem Einwirken auf Werkstücke. Der eigentliche Handhabungsvorgang wird von einer Bearbeitungs/Montagestation 11 mittels eines geeigneten Werkzeuges 12 ausgeübt. Unter "Werkzeug" werden dabei ganz allgemein Mittel verstanden, mit denen in der gewünschten Weise auf das Werkstück eingewirkt wird, es kann sich also um Bearbeitungswerkzeuge, um Greifer für Transportaufgaben, um Markierungswerkzeuge, um Prüfwerkzeuge oder dergleichen handeln. Bei einem Ausführungsbeispiel der Erfindung können acht unterschiedliche Werkzeuge 12 an der Station 11 eingesetzt werden, die in einem geeigneten Werkzeugmagazin enthalten sind und bei Bedarf ein- bzw. ausgewechselt werden. Die Werkzeugwechselposition ist dabei zweckmäßigerweise immer dieselbe, sie liegt im unmittelbaren Bereich der Station 11.

Werkstücke 14 sind auf Werkstückträgern 15 angeordnet und werden der Station 11 mittels einer insgesamt als Zubringereinrichtung 20 bezeichneten Einheit zugeführt.

Die Zubringereinrichtung 20 weist zunächst ein erstes Magazin 21 auf, in dem eine bestimmte Anzahl Speicherplätze 22 vorgesehen sind. In Fig. 1 ist angedeutet, daß die Anzahl der Speicherplätze 22 beliebig groß sein kann, beispielsweise können die Speicherplätze 21 über drei Raumkoordinaten ausgebaut werden.

Neben dem ersten Magazin 21 ist eine erste Umsetzeinrichtung 25 angeordnet, mit der Werkstückträger 15 aus dem ersten Magazin 21 entnommen oder in es eingesetzt werden können. Die erste Umsetzeinrichtung 25 wirkt mit einer seitlich an den Werkstückträgern angreifenden Fördereinrichtung 26 zusammen, die im Beispiel gemäß Fig. 1 rein schematisch als allgemeines Förderband dargestellt ist. Die Fördereinrichtung 26 verfügt über eine Reihe von Plätzen 27 zur Aufnahme der Werkzeugträger, wobei in Fig. 1 beispielhaft sämtliche Plätze 27 mit Werkstückträgern 15 versehen sind, was aber nicht notwendigerweise der Fall sein muß. An den Umsetzeinrichtungen 25 und 28 sind Sensoren angeordnet, um das Einnehmen und Ausgeben von Werkstückträgern 15 zu kontrollieren.

An einer anderen Position der Fördereinrichtung 26 befindet sich eine zweite Umsetzeinrichtung 28, mit der Werkstückträger 15 von der Fördereinrichtung 26 in ein zweites Magazin 29 mit Speicherplätzen 30 umgesetzt werden können oder umgekehrt. Zweckmäßigerweise ist das zweite Magazin 29 mit der zweiten Umsetzeinrichtung 28 ebenso aufgebaut wie das erste Magazin 21 mit der ersten Umsetzeinrichtung 25, dies muß jedoch nicht so sein. Auch die Magazine 21, 29 sind mit Sensoren zum Erkennen des Befüllungszustandes versehen.

Mit 35 ist in Fig. 1 insgesamt ein Antrieb angedeutet, beispielsweise ein elektromotorischer Antrieb. Vom gemeinsamen Antrieb 35 führen verschiedene Antriebsverbindungen 36, 36a, 36b, 36c, 36d zum ersten Magazin 21, der ersten Umsetzeinrichtung 25, der Fördereinrichtung 26, der zweiten Umsetzeinrichtung 28 und dem zweiten Magazin 29. Es versteht sich jedoch, daß statt eines gemeinsamen Antriebes 35 mit den Antriebsverbindungen 36 auch jeweils separate Einzelantriebe vorgesehen sein können.

Der Antrieb 35 steht über eine Steuerleitung 37 mit einer Umschalteinrichtung 38 in Verbindung, die ihrerseits von einem Steuergerät 39 gesteuert wird. Das Steuergerät 39 steht unter anderem über eine Datenleitung 40 mit der Station 11 in Wechselverbindung.

Die Wirkungsweise der in Fig. 1 dargestellten Handhabungseinrichtung 10 ist wie folgt:

Zu Beginn sei das erste Magazin 21 mit einer bestimmten Anzahl von Werkstückträgern 15 mit Werkstücken 14 befüllt und das zweite Magazin 29 sei leer. Wenn nun der erste Handhabungsvorgang darin besteht, in die Werkstücke 14 ein bestimmtes Loch zu bohren, wird in die Station 11 als Werkzeug 12 ein Bohrer eingesetzt. Die erste Umsetzeinrichtung 25 entleert nun das erste Magazin 21, in dem sie nacheinander sämtliche Werkstückträger 15 mit Werkstücken 14 auf die Fördereinrichtung 26 setzt, die diese Werkstückträger 15 nacheinander in den Arbeitsraum der Station 11 fördert. Geeignete Sensoren im Bereich der Station 11 erkennen, daß ein zu handhabendes Werkstück 14 in Sollposition ist und geben den Handhabungsvorgang frei. Nach erfolgter Handhabung, im vorliegenden Beispiel nach Bohren eines Loches, werden die Werkstückträger 15 zur zweiten Umsetzeinrichtung 28 gefördert, die diese in das zunächst leere zweite Magazin 29 einsetzt.

Nach Durchlauf sämtlicher Werkstücke 14 sind diese mit der genannten Bohrung versehen worden und der zweite Handhabungsvorgang soll nun beispielsweise darin bestehen, in diese Bohrung einen Stift einzusetzen.

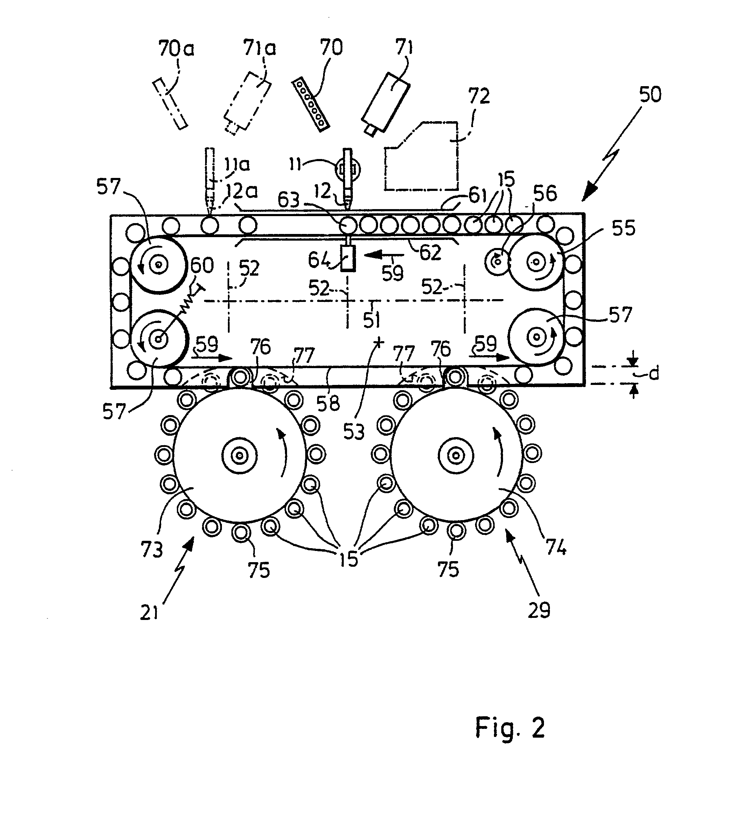

Das Steuergerät 39 übermittelt nun der Station 11 einen Steuerbefehl, wonach als Werkzeug 12 der Bohrer entnommen und ein geeigneter Greifer eingesetzt wird, der aus einer in Fig. 2 dargestellten Teilezuführeinrichtung 71 angelieferte Stifte entnehmen kann. Gleichzeitig betätigt das Steuergerät 39 die Umschalteinrichtung 38, die über die Steuerleitung 37 den Antrieb 35 oder die mehreren Teilantriebe in ihrer Wirkungsrichtung umschaltet. Demzufolge werden während des zweiten Handhabungsvorganges jetzt Werkstückträger 15 aus dem befüllten zweiten Magazin 29 mittels der zweiten Umsetzeinrichtung 28 der Fördereinrichtung 26 zugeführt und die in Fig. 1 mit einem Pfeil dargestellte Förderrichtung umgekehrt. Die Werkstückträger 15 mit Werkstücken 14 gelangen nun von der anderen Seite in den Arbeitsraum der Station 11, die in der genannten Weise den Stift in die Bohrung der Werkstücke 14 einsetzt. Die Werkstückträger 15 gelangen nach erfolgter Handhabung, d. h. nach erfolgtem Einsetzen des Stiftes über die erste Umsetzeinrichtung 25 in das zunächst leere erste Magazin 21, das sich nacheinander füllt.

Am Ende des zweiten Handhabungsvorganges ist demzufolge wieder das erste Magazin 21 befüllt und das zweite Magazin 29 leer. In entsprechender Weise wird durch Reversieren des Antriebes 35 bei gegebenenfalls erforderlichem Wechsel des Werkzeuges 12 ein Pendelbetrieb zwischen den Magazinen 21 und 29 bewirkt, wobei während jedem Umsetzvorgang von einem Magazin in das andere sämtliche Werkstücke 14 an der Station 11 vorbeilaufen und dort alle mit demselben Schritt gehandhabt werden.

Sind sämtliche vorgesehenen Handhabungsvorgänge abgeschlossen, befinden sich alle Werkstückträger 15 mit Werkstücken 14 bei ungerader Anzahl Handhabungsvorgänge im zweiten Magazin 29 und bei gerader Anzahl Handhabungsvorgänge im ersten Magazin 21. Das jeweils volle Magazin 21 oder 29 kann nun abgefahren und gegebenenfalls durch ein anderes Magazin ersetzt werden, um eine zweite Charge von Werkstücken 14 zu handhaben.

Es versteht sich, daß in Fig. 1 zwar der Übersichtlichkeit halber getrennte Magazine 21 und 29 mit getrennten Umsetzeinrichtungen 25 und 28 dargestellt sind, daß jedoch auch ein einziges gemeinsames Magazin verwendet werden kann, aus dem eine geeignete Umsetzeinrichtung die Werkstückträger nacheinander entnimmt und die gehandhabten Werkstückträger alsdann wieder in die frei gewordenen Speicherplätze einsetzt.

Weiterhin kann man aus Fig. 1 entnehmen, daß die Zahl der Speicherplätze 22 bzw. 30 in den Magazinen 21 bzw. 29 wesentlich größer ist als die Zahl der Plätze 27 der Fördereinrichtung 26, die lediglich einen gewissen Pufferbetrieb ermöglichen und, bei voneinander beabstandeten Magazinen 21 und 29, den Weg zwischen diesen Magazinen 21 und 29 überbrücken soll.

Besonders wichtig ist jedoch, daß bevorzugt alle Steuerungsvorgänge zum Betätigen der Station 11, weiterer Stationen 11a, der Zubringeeinrichtung 20, der Fördereinrichtung 26, der Magazine 21, 29, der Umsetzeinrichtungen 25, 28 sowie weiter unten noch zu schildernder Positionierstationen von den durchlaufenden Werkstückträgern 15 selbst abgeleitet werden. Die Steuerung kann somit selbsttätig arbeiten, mit Puffern und unabhängig von den einzelnen Werkstückträgern, in jedem Falle aber genau entsprechend der jeweiligen Arbeitsfolge.

Fig. 2 zeigt in vereinfachter Darstellung die mechanischen Komponenten einer praktischen Ausführungsform einer Handhabungseinrichtung, wie sie in Fig. 1 mit 10 äußerst schematisiert war.

Man erkennt in Fig. 2 einen Tisch 50 von rechteckförmiger Gestalt, der entlang einer Längslinie 51 sowie Querlinien 52 in Segmente 53 unterteilt sein kann. Man kann daher nach einem Baukastenprinzip die Segmente 53 zusammenstellen, um Tische 50 nahezu beliebiger Größe und Form aufbauen zu können.

In der rechten oberen Ecke des Tisches 50 erkennt man ein Treibrad 55, das mit einem Antriebsrad 56 eines nicht näher dargestellten Antriebes kämmt.

In den übrigen Ecken des Tisches 50 befinden sich Führungsräder 57 und über das Treibrad 55 sowie die Führungsräder 57 ist ein Förderband 58 geführt, wobei die Förderrichtung in einem Zyklus der Einrichtung mit Pfeilen 59 angedeutet ist. Eine Spanneinrichtung, die mit 60 nur für das linke untere Führungsrad 57 schematisch dargestellt ist, sorgt für eine vorgegebene Sollspannung im Förderband 58.

Das Förderband 58 liegt formschlüssig an den Rädern 55, 57 an, es kann beispielsweise auf seiner Rückseite nach Art eines Keilriemens ausgebildet sein, der in entsprechenden keilförmigen Ringnuten der Räder 55, 57 läuft. Es sind aber auch Ausführungsformen möglich, bei denen das Förderband 58 die Gestalt eines Zahnriemens hat, der in Außenverzahnungen der Räder 55, 57 läuft.

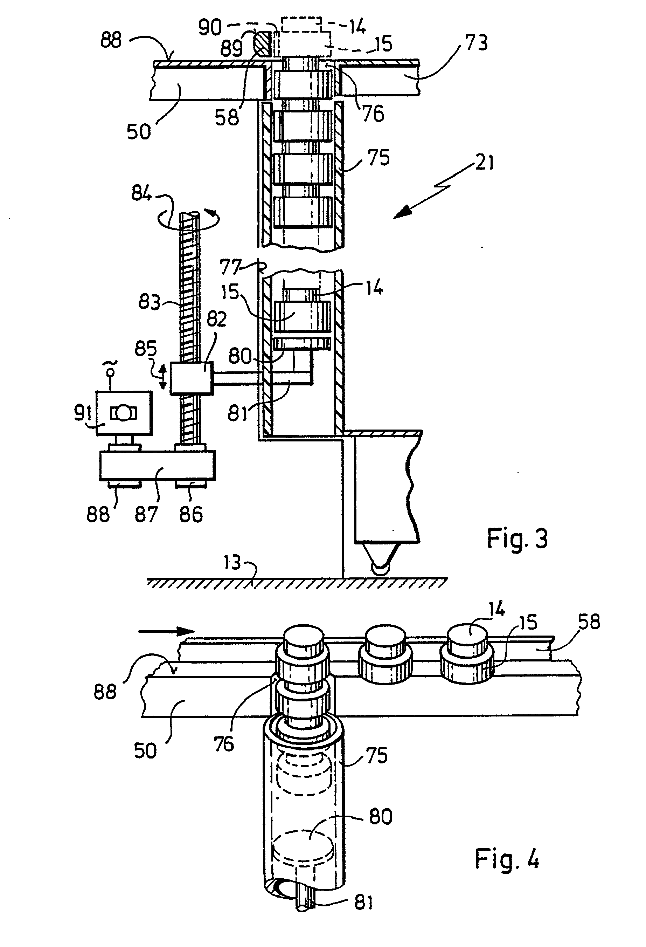

Das Förderband 58 ist somit hochkant geführt. Es greift, wie weiter unten zu Fig. 3 noch erläutert wird, kraftschlüssig an den Werkstückträgern 15 an und führt sie mit. Die Werkstückträger 15 können in beliebiger Position festgehalten und wieder freigegeben werden, ohne daß das Förderband 58 im Lauf unterbrochen wird.

Vor der Station 11 wird der durchwandernde Werkstückträger 15 in einer Positionierstation 63 von einem Festhalter 64 räumlich fixiert. Es können z.B. zwei einander gegenüberliegende Führungsschienen 61, 62, die sich rechts und links von der Station 11 erstrecken und an ihren von der Station 11 abgewandten Enden gabelförmig nach außen aufweiten vorgesehen sein. Die innen liegende Führungsschiene 62 ist dann im Bereich der Station 11 mit einem Durchbruch versehen, durch den der Festhalter 64 hindurchgreift und beliebige Werkstückträger 15 dort in der Positionierstation 63 räumlich fixieren kann.

Die Haltekraft des Festhalters 64 bestimmt sich nach der größtmöglich auftretenden Kraft, die das Werkzeug 12 für einen beliebigen Handhabungsvorgang am Werkstück 14 ausübt.

Um die verschiedenen Handhabungsvorgänge ausführen zu können, ist im Bereich des Arbeitsvolumens der Station 11 ein Werkzeugmagazin 70 und/oder eine Teilezuführeinrichtung 71 angeordnet.

Im Bereich des Arbeitsvolumens der Station 11 oder aber an anderer Stelle am Weg des Förderbandes 58 kann eine zusätzliche Bearbeitungsstation 72 beispielsweise eine Nietpresse, ein Punktschweißgerät oder dergleichen angeordnet sein. Durch die Station 11 - außerhalb deren Arbeitsvolumen manuell - wird ein Werkstück vom Werkstückträger abgehoben, der zusätzlichen Bearbeitungsstation 72 z.B. für einen Nietvorgang oder eine Punktschweißung zugeführt und anschließend wieder auf den Werkstückträger zurücktransportiert. Der an der zusätzlichen Bearbeitungsstation 72 ankommende Werkstückträger kann diese in Gang setzen; das zu handhabende Werkstück kann durch die Station 11 zuvor eingelegt worden sein.

Wie bereits weiter vorne zur Schemazeichnung von Fig. 1 erläutert, findet ein Wechsel des Werkzeuges 12 nach jedem Handhabungszyklus, das heißt nach Durchlaufen sämtlicher Werkstückträger 15 der jeweiligen Charge statt. Bei der Anordnung gemäß Fig. 2 dreht die Station auf das Werkzeugmagazin 70, wechselt das Werkzeug 12 aus, z.B. einen Fräser gegen einen Bohrer, und schwenkt dann in die Ausgangsstellung zurück. Folgt ein Montagevorgang, wird als Werkzeug ein Greifer eingesetzt, der an der Teilezuführeinrichtung 71 das zu montierende Teil, beispielsweise einen Stift, eine Schraube, eine Feder oder dergl. entnimmt und am Werkstück montiert. Das oben erwähnte Zuführen eines Werkstückes an eine zusätzliche Bearbeitungsstation 72 wird ebenso mit einem als Werkzeug 12 eingesetzten Greifer ausgeführt.

Man erkennt in Fig. 2 ferner links von der Station 11 eine weitere Station 11a mit Werkzeug 12a und zugeordnetem Werkzeugmagazin 70a sowie Teilezuführeinrichtung 71a. Diese Bearbeitungs- und Montagestation 11a ist notwendigerweise mit einer Positionierstation 63a und einem Festhalter 64a ergänzt. In der zweiten Station 11a kann entweder ein weiterer Handhabungsvorgang erfolgen, beispielsweise kann eine in der Station 11 eingesetzte Schraube in der weiteren Station 11a mit einer Mutter gekontert werden. Es ist aber auch möglich, bei-

de Stationen 11, 11a mit dem gleichen Werkzeug 12, 12a zu versehen, wobei die Werkstücke 14 immer paarweise bearbeitet werden, derart, daß jeweils ein Werkstück 14 an der Station 11a und der darauffolgende an der Station 11 bearbeitet wird und dann die nächsten beiden Werkstücke 14 mittels des Förderbandes 58 den Stationen 11 und 11a zugeführt werden.

Wie man unten rechts aus Fig. 2 entnehmen kann, läuft das Förderband 58 in einer Bahn, die – abgesehen von den Ecken – einen Abstand d von den Außenkanten des Tisches 50 hat. Dieser Abstand d entspricht zweckmäßigerweise dem Durchmesser kreisscheibenförmiger Werkstückträger 15, die infolgedessen über fast die gesamte Länge der Seiten des Tisches 50 dicht am Rand entlang gefördert werden.

In einer tangentialen Position zu der unteren Längsseite des Tisches 50 erkennt man die beiden Magazine 21, 29, welche die Gestalt von Drehkörpern 73 bzw. 74 aufweisen. An der Peripherie der Drehkörper 73, 74 erkennt man Zylinderrohre 75, die in der Darstellung von Fig. 2 senkrecht zur Zeichenebene angeordnet sind. Durch Drehung der Drehkörper 73, 74 um ihre Hochachse gelangt immer eines der Zylinderrohre 75 unter eine U-förmige oder kreisförmige Aussparung 76 der Deckplatte des Tisches 50, während die Drehkörper 73, 74 mit den Zylinderrohren 75 im übrigen in eine zylindermantelförmige Aussparung 77 des Unterbaues des Tisches 50 greifen, wie dies nachstehend noch erläutert wird.

Bei der Darstellung von Fig. 2 befinden sich während des durch die Pfeile 59 gekennzeichneten Zyklus die noch nicht gehandhabten Werkstückträger in den Zylinderrohren 75 des Drehkörpers 74 und werden in weiter unten noch erläuterter Weise senkrecht zur Zeichenebene in Eingriff mit dem Förderband 58 gebracht. Durch Drehung der Räder 55 bis 57 in der eingezeichneten Drehrichtung werden die Werkstückträger 15 nun am Rande des Tisches 50 entlang an die Positionierstation 63 herangefördert, dort gehandhabt, anschließend weitergefördert und dann in die Zylinderrohre 75 des Drehkörpers 73 eingesetzt. Sind auf diese Weise sämtliche Werkstückträger 15 aus den Zylinderrohren 75 des Drehkörpers 74 an der Station 1 vorbeigelaufen, wird die Drehrichtung der Räder 55 bis 57 umgekehrt und auch die Förderrichtung des Bandes 58 kehrt sich gegenüber den Pfeilen 59 um und der Durchlauf beginnt in entgegengesetzter Richtung. Solange dabei noch ein weiterer Handhabungsvorgang folgt, ist es nicht erforderlich, daß sämtliche Werkstückträger 15 in die Zylinderrohre 75 des Drehkörpers 73 hineingefördert werden, das Förderband 58 kann vielmehr in der Förderrichtung umgeschaltet werden, während sich der letzte Werkstückträger 15 noch in der Positionierstation 63 befindet. Nach dem Werkzeugwechsel wird das Werkstück 14 dieses Werkstückträgers 15 als erstes im neuen Zyklus gehandhabt und die auf der Strecke zwischen der Positionierstation 63 und dem ersten Magazin 21 befindlichen Werkstückträger 15 kehren um, ohne zuvor in das Magazin 51 eingesetzt worden zu sein. Nur nach Abschluß des letzten Handhabungsvorgangs ist es selbstverständlich erforderlich, sämtliche Werkstückträger 15 vom Tisch 50 abzufördern und in das dann zuständige Magazin 21 oder 22 einzusetzen.

Bei Beginn bzw. bei Beendigung des gesamten Handhabungsvorganges werden die Drehkörper 73 bzw. 74 mit den Zylinderrohren 75 an die in Fig. 2 gezeichnete Position herangefahren bzw. wieder weggefahren. Die Zylinderrohre 75 sind dabei abnehmbar und können getrennt von den Drehkörpern 73 bzw. 74 stapelweise mit Werkstückträgern 15 und Werkstücken 14 bestückt werden.

Die bereits weiter oben erwähnten Sensoren zum Erfassen des Befüllungszustandes der Magazine 21, 29 sind bei diesem Ausführungsbeispiel so ausgebildet, daß sowohl die Anzahl der Werkstückträger 15 in einem Zylinderrohr, unterhalb des jeweils obersten Werkstückträgers 15 erkannt werden kann, wie auch entsprechende Anzahlen weiterer Zylinderrohre 75. Auf diese Weise kann nach Entleerung bzw. Befüllung eines Zylinderrohres 75 auf das nächste Zylinderrohr 75 oder aber auf das nächste Magazin 21, 29 weitergeschaltet werden.

In den Fig. 3 und 4 ist der Anschluß der Drehkörper 73, 74 mit Zylinderrohren 75 an dem Tisch 50 im einzelnen dargestellt.

Man erkennt, daß der Stapel von Werkstückträgern 15 mit Werkstücken 14 am unteren Ende von einem Kolben 80 getragen wird, der über eine Mitnehmerzunge 81 mit einer Spindelmutter 82 in Verbindung steht. Die Spindelmutter 82 läuft in einer mit einem Doppelpfeil 85 angedeuteten Richtung auf einer Spindel 83, die sich in Richtung eines Pfeiles 84 dreht. Die Spindelmutter 82 mit Spindel 83 befindet sich im Tisch 50. Die Spindel 83 wird über ein Spindelritzel 86 angetrieben, das mit der Spindel 83 drehfest verbunden ist und mit einem Zahnriemen 87 kämmt, der seinerseits von einem weiteren Ritzel 88 eines Motors 91 in Bewegung versetzt wird. Der Vorschub des Kolbens 80 wird beim Entleeren z.B. des Magazins 21 so eingestellt, daß der oberste, in Fig. 3 gestrichelt eingezeichnete Werkstückträger 15 mit Werkstück 14 in einer Position ist, in der seine Unterseite oberhalb einer Oberfläche 88 des Tisches 50 liegt oder mit dieser fluchtet.

Wie bereits zu Fig. 2 erläutert, verläuft das Förderband 58 in einem Abstand d zur Längsseite des Tisches 50. Die Drehkörper 73, 74 sind nun so positioniert, daß eine Tangentialebene der Innenfläche des Zylinderrohres 75, das sich in der Aussparung 76 befindet, mit der Seitenfläche des Förderbandes 58 fluchtet.

Beim in den Fig. 3 und 4 dargestellten Ausführungsbeispiel besteht entweder das Förderband 58 insgesamt oder zumindest seine in Fig. 3 nach rechts weisende senkrechte Fläche aus einem ferromagnetischen Material. Die Rückseite des Förderbandes 58 ist in Fig. 3 mit einem keilförmigen Profil 89 versehen, kann jedoch - wie bereits erläutert - auch nach Art eines Zahnriemens ausgebildet sein.

Die Werkstückträger 15 sind an ihrer, dem Förderband 58 zu weisenden Stirnfläche mit einem Dauermagneten 90 versehen. Sobald nun mittels des spindelgeführten Kolbens 80 ein Werkstückträger 15 und Werktück 14 in die in Fig. 3 gestrichelt eingezeichnete oberste Position gebracht wird, haftet der Dauermagnet 90 am Förderband 58 und der Werkstückträger 15 wird in einer Richtung senkrecht zur Zeichenebene der Fig. 3 weg gefördert.

Soll z.B. das Magazin 21 hingegen befüllt werden, wird der spindelgeführte Kolben 80 in eine Position gefahren, in der die Oberseite des jeweils obersten Werkstückträgers 15 mit Werkstück 14 etwas unterhalb der Oberfläche 88 des Tisches 50 liegt oder mit dieser fluchtet. Der nächste ankommende Werkstückträger 15 mit Werkstück 14 wird nun, unter gleichzeitigem Verfahren des Kolbens 80 nach unten, von seinem Eigengewicht vom Förderband 58 abgeschoben, so daß der Dauermagnet 90 außer Eingriff mit dem Förderband 58 gerät.

In Fig. 3 nicht dargestellte Verbindungselemente können für elektrische und/oder pneumatische Steuerleitungen, für Druckleitungen und dergleichen vorgesehen sein, beispielsweise um eine Kolben-Zylindereinheit zu betätigen.

Wenn man bei einer erfindungsgemäßen Handhabungseinrichtung eine Mitnahme der Werkstückträger 15 mittels einer Haftverbindung verwendet, wie sie anhand von Fig. 3 durch den Dauermagneten 90 mit dem zumindest teilweise ferromagnetischen Förderband 58 erläutert wurde, kann man sich diese Haftverbindung für eine Steuerung des Fördervorganges zunutze machen, wie sie noch anhand der Fig. 1 und 2 erläutert sei:

Man erkennt bei dem in Fig. 2 dargestellten Zyklus der Förderung der Werkstückträger 15 vom zweiten Magazin 29 über die Station 11 zum ersten Magazin 21, daß sich vor der Positionierstation 63 ein Stau von Werkstückträgern 15 gebildet hat, weil die Handhabung des in der Positionierstation 63 befindlichen Werkstückträgers 15 eine gewisse Zeit in Anspruch nimmt. Da die Handhabungszeiten von Handhabungsvorgang zu Handhabungsvorgang variieren, könnte man zwar den Fördertakt entsprechend einstellen, man kann aber auch, wie dies Fig. 1 zeigt, zu beiden Seiten der Station 11 im Bereich der Fördereinrichtung 26 Sensoren 110 bzw. 110a vorsehen, die über eine Steuerleitung 111 mit dem Steuergerät 39 verbunden sind. Diese Sensoren 110 (bzw. 110a bei einem Zyklus mit entgegengesetzter Förderrichtung) erkennen bei der praktischen Ausführungsform gemäß Fig. 2, wieviele Werkstückträger 15 sich beispielsweise im Bereich der Station 11 befinden. Überschreitet diese Zahl einen vorgegebenen Wert, oder haben, mit anderen Worten, die Sensoren 110 bzw. 110a einen Stau erkannt, hält das Steuergerät 39 entweder den Fördervorgang aus den Magazinen 21, 29 an oder reduziert den Takt, beispielsweise durch Halbieren der Taktfrequenz. Erkennen nun die Sensoren 110, 110a nach einer gewissen Zeit, daß der Stau sich aufgelöst hat und nunmehr wieder weniger als die vorbestimmte Zahl von Werkstückträgern im Bereich der Station 11 sind, kann entweder die Förderung aus dem Magazin 29 (beim Zyklus gemäß Fig. 2) wieder aufgenommen oder der Fördertakt wieder auf den alten Wert eingestellt werden.

Im Ergebnis regelt sich damit die Anlage vollkommen von selbst, weil sie immer dann die Förderleistung erhöht, wenn Raum in einer Wartezone vor der Station 11 ist und dann reduziert, wenn sich ein Stau bildet. Die Werkstückträger 15 im Stau vor der Station 11 werden in diesem Falle von dem in der Positionierstation 63 mittels des Festhalters 64 fixierten Werkstückträger 15 gehalten und das Förderband 58 gleitet unterdessen unter Gleitreibung an den Dauermagneten 90 der gestauten Werkzeugträger 15 entlang. Löst sich nun der Festhalter 64 von dem fertig gehandhabten Werkstückträger 15 in der Positionierstation 63, folgt der nächste, bislang aufgehaltene Werkstückträger 15 von selbst nach und wird nun seinerseits mittels des Festhalters 64 in der Positionierstation 63 fixiert. Ein gesondertes Lösen und anschließendes Greifen des Förderbandes 58 an den Werkstückträgern 15 entfällt somit.

Für die Elemente der Fig. 3 und 4 bedeutet dies, daß, solange sich kein Stau vor der Station 11 gebildet hat, sich der spindelgeführte Kolben 80 kontinuierlich nach oben bewegen kann, weil die mit ihrer Unterseite über die Oberfläche 88 des Tisches 50 gelangenden Werkstückträger 15 von selbst vom Förderband 58 ergriffen und abtransportiert werden. Ein taktweises Arbeiten des Kolben 80 ist damit beim Entleeren eines Magazins nicht erforderlich. Erst wenn ein Zylinderrohr 75 vollkommen geleert ist, muß der Drehkörper 73 um seine Hochachse gedreht werden, bis das nächste, gefüllte Zylinderrohr 75 mit der Aussparung 76 fluchtet.

Andererseits ist beim Befüllen der Zylinderrohre 75 von oben mittels der Kolben-Zylinder-Einheit ein taktweises Arbeiten vonnöten, weil der Kolben immer dann einen Werkstückträger 15 von oben in das Zylinderrohr 75 hineindrücken muß, wenn der Werkstückträger 15 gerade mit dem Zylinderrohr 75 fluchtet. Um diesen Moment zu erkennen, kann man sich geeigneter Sensoren bedienen, wie sie an sich bekannt und daher in Fig. 3 und 4 nicht näher dargestellt sind.

## Patentansprüche

1. Vorrichtung zum Handhaben von Werkstücken (14) mit einer ortsfesten, mindestens ein Werkzeug (12) aufweisenden Bearbeitungs/Montagestation (11) mit Magazinen (21, 29) und einer mit Antriebsmitteln (35) versehenen Zubringereinrichtung (20), die zwischen der Station (11) und den Magazinen (21, 29) in Gestalt einer Fördereinrichtung (26), die ein auf einem Tisch (50) angeordnetes Förderband (58) aufweist, zum Transport einer vorbestimmten Anzahl von Werkstückträgern (15) angeordnet ist, dadurch gekennzeichnet, daß die vorzugsweise fahrbaren Magazine (21, 29) getrennt von der Fördereinrichtung (26) angeordnet sind, daß die Zubringereinrichtung (20) zwischen den Magazinen (21, 29) und der Fördereinrichtung (26) Umsetzeinrichtungen (25, 28) aufweist, daß die Magazine (21, 29), die Umsetzeinrichtungen (25, 28), die Fördereinrichtung (26) und die Station (11) einzeln antreibbar sind, und daß das Förderband (58) so ausgebildet ist, daß es seitlich in die Werkstückträgern (15) angreift und diese kraftschlüssig mitführt.

2. Vorrichtung nach Anspruch 1, dadurch gekennzeichnet, daß der Tisch (50) in mehrere Segmente (53) unterteilbar ist.

3. Vorrichtung nach Anspruch 1 oder 2, dadurch gekennzeichnet, daß das Förderband (58) formschlüssig über mindestens ein Treibrad (55) und mindestens ein Führungsrad (57) läuft.

4. Vorrichtung nach einem der Ansprüche 1 bis 3, dadurch gekennzeichnet, daß das Förderband (58) wenigstens abschnittsweise in einem Abstand (d) vom Rand der Oberfläche (88) des Tisches (50) verläuft.

5. Vorrichtung nach einem der Ansprüche 1 bis 4, dadurch gekennzeichnet, daß die Fördereinrichtung (26) und/oder die Werkstückträger (15) mit Haftmitteln, vorzugsweise Magneten, versehen sind.

6. Vorrichtung nach einem der Ansprüche 1 bis 5, dadurch gekennzeichnet, daß im Arbeitsraum der Station (11) ein Festhalter (64) vorgesehen ist, der den Werkstückträger (15) in einer Positionierstation (63) fixiert.

7. Vorrichtung nach Anspruch 6, dadurch gekennzeichnet, daß in vorgegebenem Abstand von der Positionierstation (63) Sensoren (110, 110a) angeordnet sind, die die Anzahl der auf einer vorbestimmten Länge der Fördereinrichtung (26) befindlichen Werkstückträger (15) erfassen und Antriebsmittel (35) steuern.

8. Vorrichtung nach einem der Ansprüche 1 bis 7, dadurch gekennzeichnet, daß die Magazine (21, 29) als Raumbereiche desselben Speichers ausgebildet sind.

9. Vorrichtung nach einem der Ansprüche 1 bis 8, dadurch gekennzeichnet, daß die Magazine (21, 29) als Drehkörper (73, 74) ausgebildet sind, die über ihren Umfang verteilt in mehreren Ebenen übereinander die Werkstückträger (15) speichern.

10. Vorrichtung nach Anspruch 9, dadurch gekennzeichnet, daß die Drehkörper (73, 74) an ihrem Umfang mit senkrecht angeordneten Zylinderrohren (75) versehen sind, die jeweils eine vorbestimmte Anzahl von Werkstückträgern (15) übereinander gestapelt enthalten und daß die Zylinderrohre (75) in Aussparungen (76) des Tisches (50) einfahrbar sind.

11. Vorrichtung nach Anspruch 9 oder 10, dadurch gekennzeichnet, daß die Zubringereinrichtung (20) eine Einrichtung zum Drehen der Drehkörper (73, 74) aufweist.

12. Vorrichtung nach Anspruch 10, dadurch gekennzeichnet, daß die Umsetzeinrichtung (25) Mittel zum Verschieben des Stapels von Werkstückträgern (15), vorzugsweise Kolben (80) aufweist.

13. Vorrichtung nach Anspruch 12, bei der die Mittel zum Verschieben des Stapels einen Kolben (80) aufweisen, dadurch gekennzeichnet, daß der Kolben (80) mit einer Spindelmutter (82) in Verbindung steht, die in einer Spindel (83) läuft, die sich im Tisch (50) befindet.

14. Verfahren zum Handhaben von Werkstücken (14), bei dem ein Werkzeug (12) einer Bearbeitungs/Montagestation (11) auf das Werkstück (14) einwirkt, bei dem ferner eine vorbestimmte Anzahl Werkstückträger (15) mittels einer Zubringereinrichtung (20) der Station (11) aus Magazinen (21, 29) zugeführt werden, bei dem in einer vorbestimmten Nähe der Station (11, 11a) die Anzahl der dort befindlichen Werkstückträger (15) erfaßt wird, bei überschreiten einer vorgegebenen Anzahl die Förderleistung der Magazine (21, 29), Umsetzeinrichtungen (25, 28) und der eine Fördereinrichtung (26) aufweisenden Zubringereinrichtung (20) vermindert wird, nach erfolgter Handhabung aller Werkstücke (14) gleicher Art die Förderrichtungen der Magazine (21, 29), der Umsetzeinrichtungen (25, 28) und der Fördereinrichtung (26) umgeschaltet werden und nach erfolgter Handhabung aller Werkstücke (14) gleicher Art das Werkzeug (12) gewechselt wird.

15. Verfahren nach Anspruch 14, dadurch gekennzeichnet, daß die Fördereinrichtung (26) kontinuierlich durchläuft- und daß Förderelemente der Fördereinrichtung (26) bei Erreichen einer Positionierstation (63) bzw. bei Auftreffen eines weiteren Werkstückträgers (15) auf den in der Positionierstation (63) fixierten Werkstückträger (15) relativ zu dem bzw. zu dem weiteren Werkstückträger (15) gleiten.

16. Verfahren nach Anspruch 14 oder 15, dadurch gekennzeichnet, daß die Förderelemente die Werkstückträger (15) mittels Haftkräften, vorzugsweise magnetisch erzeugten Kräften, fördern.

17. Verfahren nach einem der Ansprüche 14 bis 16, dadurch gekennzeichnet, daß die Montagestation (11, 11a), die Zubringereinrichtung (20), die Fördereinrichtung (26), die Magazine (21, 29), die Umsetzeinrichtungen (25, 28) und die Positionierstation (63) von den durchlaufenden Werkstückträgern (15) gesteuert werden.

**Revendications**

1. Dispositif de manipulation de pièces d'usinage (14) comprenant une station d'usinage/montage (11), stationnaire qui présente au moins un outil (12), et comprenant des magasins (21, 29) et un dispositif d'amenée (20) qui est pourvu de moyens d'entraînement (35) et est, pour le transport d'un nombre prédéterminé de supports de pièce (15), agencé entre la station (11) et les magasins (21, 29), sous la forme d'un dispositif de transport (26), qui présente une bande transporteuse (58) agencée sur une table (50), caractérisé en ce que les magasins (21, 29), de préférence mobiles, sont agencés séparément du dispositif de transport (26), en ce que le dispositif d'amenée (20) présente des dispositifs de transfert (25, 28) entre les magasins (21, 29) et le dispositif de transport (26), en ce que les magasins (21, 29), les dispositifs de transfert (25, 28), le dispositif de transport (26) et la station (11) peuvent être entraînés individuellement et en ce que la bande transporteuse (58) est réalisée de telle manière qu'elle agit latéralement sur les supports de pièce (15) et qu'elle entraîne ceux-ci par une liaison due à une force.

2. Dispositif suivant la revendication 1, caractérisé en ce que la table (50) peut être subdivisée en plusieurs segments (53).

3. Dispositif suivant la revendication 1 ou 2, caractérisé en ce que la bande transporteuse (58) passe sur au moins une roue d'entraînement (55) et au moins une roue de guidage (57) en réalisant une liaison de forme.

4. Dispositif suivant l'une des revendications 1 à 3, caractérisé en ce que la bande transporteuse (58) s'étend au moins par section à une distance (d) du bord de la surface (88) de la table (50).

5. Dispositif suivant l'une des revendications 1 à 4, caractérisé en ce que le dispositif de transport (26) et/ou les supports de pièce (15) sont pourvus de moyens d'adhérence, de préférence des aimants.

6. Dispositif suivant l'une des revendications 1 à 5, caractérisé en ce qu'il est prévu, dans l'espace de travail de la station (11), un organe de retenue (64) qui fixe le support de pièce (15) dans une station de positionnement (63).

7. Dispositif suivant la revendication 6, caractérisé en ce que, à une distance prédéterminée de la station de positionnement (63), sont agencés des détecteurs (110, 110a) qui enregistrent le nombre de supports de pièce (15) situé sur une longueur prédéterminée du dispositif de transport (26) et commandent des moyens d'entraînement (35).

8. Dispositif suivant l'une des revendications 1 à 7, caractérisé en ce que les magasins (21, 29) sont réalisés sous la forme de zones d'emplacement du même réservoir.

9. Dispositif suivant l'une des revendications 1 à 8, caractérisé en ce que les magasins (21, 29) sont réalisés sous la forme de corps pivotants (73, 74) qui emmagasinent les supports de pièce (15) de manière répartie sur leur pourtour et en plusieurs plans superposés.

10. Dispositif suivant la revendication 9, caractérisé en ce que les corps pivotants (73, 74) sont pourvus, sur leur pourtour, de tubes cylindriques (75) qui sont agencés verticalement et qui contiennent chacun un nombre prédéterminé de supports de pièce (15) empilés l'un sur l'autre et en ce que les tubes cylindriques (75) peuvent être introduits dans des évidements (76) de la table (50).

11. Dispositif suivant la revendication 9 ou 10, caractérisé en ce que le dispositif d'amenée (20) présente un dispositif destiné à faire tourner les corps pivotants (73, 74).

12. Dispositif suivant la revendication 10, caractérisé en ce que le dispositif de transfert (25) présente des moyens pour déplacer la pile de supports de pièces (15), de préférence un piston (80).

13. Dispositif suivant la revendication 12, dans lequel les moyens destinés au déplacement de la pile présentent un piston (80), caractérisé en ce que le piston (80) est en liaison avec un écrou (82) qui parcourt un arbre (83) se trouvant dans la table (50).

14. Procédé de manipulation de pièces d'usinage (14), dans lequel un outil (12) d'une station d'usinage/montage (11) travaille la pièce d'usinage (14), dans lequel en outre un nombre prédéterminé de supports de pièce (15) est amené à la station (11) à partir de magasins (21, 29) au moyen d'un dispositif d'amenée (20), et dans lequel, dans une proximité prédéterminée de la station (11, 11a), le nombre des supports de pièce (15) s'y trouvant est saisi, la capacité de transport des magasins (21, 29), des dispositifs de transfert (25, 28) et du dispositif d'amenée (20) présentant un dispositif de transport (26) étant diminuée lors du dépassement d'un nombre prédéterminé, les sens de transport des magasins (21, 29), des dispositifs de transfert (25, 28) et du dispositif de transport (26) étant commutés, après que la manipulation de toutes les pièces d'usinage (14) d'un même type a eu lieu, l'outil (12) étant changé après que la manipulation de toutes les pièces d'usinage (14) d'un même type a eu lieu.

15. Procédé suivant la revendication 14, caractérisé en ce que le dispositif de transport (26) marche continuellement et en ce que, lorsqu'une station de positionnement (63) est atteinte ou respectivement lorsqu'un autre support de pièce (15) rencontre le support de pièce (15) fixé dans la station de positionnement (63), des éléments de transport du dispositif de transport (26) glissent par rapport à ce dernier ou respectivement par rapport à l'autre support de pièce (15).

16. Procédé suivant la revendication 14 ou 15, caractérisé en ce que les éléments de transport transportent les supports de pièce (15) au moyen de forces d'adhérence, de préférence des forces produites magnétiquement.

17. Procédé suivant l'une des revendications 14 à 16, caractérisé en ce que la station de montage (11, 11a), le dispositif d'amenée (20), le dispositif de transport (26), les magasins (21, 29), les dispositifs de transfert (25, 28) et la station de positionnement (63) sont commandés par les supports de pièce (15) en circulation.

**Claims**

1. Apparatus for handling workpieces (14) with a fixed machining/assembly station (11) with magazines (21, 29) having at least one tool (12) and a feeding device (20) provided with drive means (35) arranged between station (11) and the magazines (21, 29) in the form of a conveyor (26), which has a conveyor belt (58) located on a table (50) for conveying a predetermined number of work carriers (15), characterized in that the preferably movable magazines (21, 29) are arranged separately from the conveyor (26), that the feeding device (20) is provided with transfer devices (25, 28) between the magazines (21, 29) and the conveyor (26), that the magazines (21, 29), transfer devices (25, 28), conveyor (26) and station (11) can be individually driven and that the conveyor belt (58) is constructed in such a way that it acts laterally on the work carriers (15) and non-positively entrains the same.

2. Apparatus according to claim 1, characterized in that the table (50) can be subdivided into several segments (53).

3. Apparatus according to claims 1 or 2, characterized in that the conveyor belt (58) runs positively over at least one drive wheel (55) and at least one guide wheel (57).

4. Apparatus according to one of the claims 1 to 3, characterized in that the conveyor belt (58) at least in portions is at a distance (d) from the edge of the surface (88) of table (50).

5. Apparatus according to one of the claims 1 to 4, characterized in that the conveyor (26) and/or the work carriers (15) are provided with adhesive means, preferably magnets.

6. Apparatus according to one of the claims 1 to 5, characterized in that in the work area of station (11) is provided a locking device (64), which fixes the work carrier (15) in a positioning station (63).

7. Apparatus according to claim 6, characterized in that sensors (110, 110a) are arranged at a predetermined distance from the positioning station (63) and detect the number of work carriers (15) located on a predetermined length of conveyor (26) and control drive means (35).

8. Apparatus according to one of the claims 1 to 7, characterized in that the magazines (21, 29) are constructed as spatial areas of the same store.

9. Apparatus according to one of the claims 1 to 8, characterized in that the magazines (21, 29) are constructed as rotary bodies (73, 74), which store the work carriers (15) in several planes and in superimposed manner distributed over the circumference thereof.

10. Apparatus according to claim 9, characterized in that the rotary bodies (73, 74) are circumferentially provided with vertically arranged cylindrical tubes (75), which in each case contain in superimposed stacked manner a predetermined number of work carriers (15) and that the cylindrical tube (75) can be introduced into recesses (76) of table (50).

11. Apparatus according to claims 9 or 10, characterized in that the feeding device (20) has a member for rotating rotary bodies (73, 74 ).

12. Apparatus according to claim 10, characterized in that the transfer device (25) has means for moving the stack of work carriers (15), preferably piston (80).

13. Apparatus according to claim 12, in which the means for displacing the stack have a piston (80), characterized in that the piston (80) is connected to a spindle nut (82) running in a spindle (83) located in table (50).

14. Method for handling workpieces (14), in which a tool (12) of a machining/assembly station (11) acts on the workpiece (14), in which a predetermined number of work carriers (15) are supplied from magazines (21, 29) to station (11) by means of a feeding device (20), in which in a predetermined distance with respect to station (11, 11a) the number of work carriers (15) located there is detected, on exceeding a predetermined number the feed capacity of the magazines (21, 29), transfer devices (25, 28) and the feeding device (20) having a conveyor (26) is reduced, after completed handling of all the workpieces (14) of the same type the conveying directions of the magazines (21, 29), transfer devices (25, 28) and conveyor (26) are reversed and after completed handling of all the workpieces (14) of the same type the tool (12) is changed.

15. Method according to claim 14, characterized in that the conveyor (26) passes through continuously and that conveying elements of conveyor (26) on reaching 3 positioning station (63) or on encountering a further work carrier (15) slide on the work carrier (15) fixed in positioning station (63) relative to the further work carrier (15).

16. Method according to claim 14 or 15, characterized in that the conveying members of the work carrier (15) convey by means of adhesive forces, preferably magnetically produced forces.

17. Method according to one of the claims 14 to 16, characterized in that the assembly station (11, 11a), feeding device (20), conveyor (26), magazines (21, 29), transfer devices (25, 28) and positioning station (63) are controlled by the passing work carriers (15).

Fig. 1

EP 0 197 364 B1

Fig. 2

Fig. 3

Fig. 4